# EUROPÄISCHE PATENTSCHRIFT

(11) **EP 1 642 036 B1**
(45) Veröffentlichungstag und Bekanntmachung des Hinweises auf die Patenterteilung: **04.03.2009**
(21) Anmeldenummer: 04737369.1
(22) Anmeldetag: 05.07.2004
(51) Int. Cl.: F16B 21/08, F16B 5/00, E04F 15/02, E04F 13/08

(54) **PLATTE ZUR VERLEGUNG AUF BÖDEN, WÄNDEN, DECKEN, FASSADEN ODER DGL**
TILE FOR APPLICATION TO FLOORS, WALLS, CEILINGS, FACADES, OR SIMILAR
PLAQUE DESTINEE A ETRE APPLIQUEE SUR DES SOLS, AINSI QUE SUR DES MURS, PLAFONDS, FA ADES OU ANALOGUES

(30) Priorität: 07.07.2003 AT 4782003 U
(43) Veröffentlichungstag der Anmeldung: 05.04.2006
(73) Patentinhaber: Poschacher Natursteinwerke GmbH & Co Kg, 4222 St. Georgen (AT)
(72) Erfinder: SÜMECZ, Franz, A-2294 Marchegg (AT); CVETANOVIC, Aleksandra, A-1100 Wien (AT); STEINER, Gerhard, A-4073 Wilhering (AT)
(74) Vertreter: Haffner, Thomas M.
(86) Internationale Anmeldenummer: PCT/AT2004/000239
(87) Internationale Veröffentlichungsnummer: WO 2005/003574

(56) Entgegenhaltungen:
- EP-A- 1 400 641
- WO-A-03/040491
- WO-A-03/093605
- DE-U- 20 107 338
- DE-U- 20 114 787
- DE-U- 29 703 123
- GB-A- 589 635
- US-A- 3 657 852

## Beschreibung

Die Erfindung betrifft eine Platte zur Verlegung auf Böden, Wänden, Decken, Fassaden oder dgl. im Innen- und Außenbereich, mit Verriegelungsgliedern, welche mit Verriegelungsgliedern benachbarter Platten zur Herstellung einer Schnappverbindung zwischen denselben zusammenwirken, wobei die Verriegelungsglieder wenigstens einen Vorsprung oder eine Ausnehmung umfassen und mit einem an der Unterseite der Platte angebrachten plattenförmigen Träger verbunden oder an diesem angeformt sind.

Die Erfindung betrifft weiters einen plattenförmigen Träger zur Anbringung an der Unterseite einer Platte.

Auf Böden, Wänden, Decken, Fassaden und dgl. verlegbare Platten, wie beispielsweise Steinplatten, Keramikplatten, Holzplatten, Parkettplatten, Laminatplatten, Dekorplatten, Teppichfliesen und Glasfliesen, werden auf herkömmliche Art und Weise z.B. mit Hilfe eines Klebers am jeweiligen Untergrund befestigt und gegebenenfalls die Fugen mit einer Fugenmasse ausgefüllt. Diese Art der Verlegung weist jedoch einige Nachteile auf. Für das Verlegen der Platten sind fundierte Handwerkerkenntnisse erforder-lich, wobei kleine Fehler im Zuge des Verlegens der Platten, wie unregelmäßige Abstände, ungleichmäßiges Auftragen des Klebers etc., sich stark störend auswirken. Kleine Unebenheiten des Untergrundes und vor allem ein ungleichmäßiges Auftragen des Klebers und die dadurch hervorgerufenen Hohlräume unterhalb der Platte können bei Belastung der Platten zu einem Bruch der sel-ben führen. Weiters ist es nicht möglich bereits verlegte Platten zerstörungsfrei zu demontieren. Genau so wenig ist es möglich einzelne Platten mit geringem Aufwand auszutauschen.

Aus diesem Grund sind bereits Verlegesysteme für Platten der eingangs genannten Art bekannt geworden, bei welchen mit den Platten Verriegelungsglieder verbunden sind, mit deren Hilfe Schnappverbindungen zu benachbarten Platten hergestellt werden können, wobei die Verriegelungsglieder wenigstens einen Vorsprung oder eine Ausnehmung umfassen. So ist beispielsweise aus der FR 2 826 392 eine Platte bekannt geworden, an deren Rand ein Schnappelement angeordnet ist, welches in einen entsprechenden Aufnahmequerschnitt am Rand einer benachbarten Platte einrasten kann. Ähnliche Schnappmechanismen sind aus der US 6 446 413, der DE 101 58 215 und der WO 03/040491 bekannt geworden. All diesen Verlegesystemen ist jedoch gemeinsam, dass die zu verlegenden Platten lediglich unter Einhaltung jeweils einer vorgegebenen Fügerichtung aneinander gesteckt werden können, was eine eingeschränkte Flexibilität bei der Verlegearbeit mit sich bringt. Insbesondere können Probleme auftreten, wenn die unmittelbar an eine Wand angrenzende Abschlußreihe eines Bodenbelages verlegt werden muss, da hier beschränkte Platzverhältnisse zu berücksichtigen sind.

Die GB 589635 zeigt Verlegeplatten, die an zwei einander benachbarten Plattenrändern eine Mehrzahl von vorstehenden Verrastungselementen aufweisen, die im Wesentlichen kugelförmig ausgebildet sind und in entsprechende kugelförmige Ausnehmungen hineingedrückt werden, was eine elastische Verformung der kugelartigen Vorsprünge erfordert.

Die DE 20107338 U zeigt und beschreibt ein flexibles Bodenbelagsträgersystem, wobei auf der Unterseite des zu verwendenden Bodenbelags eine mit seitlichen Aussparungen versehene Struktur aus Polyurethan angebracht ist, wobei der Bodenbelag und die Polyurethanstruktur eine fest verbundene Einheit bilden und die seitlichen Aussparungen als Aufnahmeorte für Steckverbinder vorgesehen sind, die eine lösbare Verbindung der einzelnen aneinandergesteckten Bodenbelagselemente ermöglichen.

Die DE 29703123 U beschreibt einen Bodenbelag, bei dem die Belagbahnen mehrteilig gestaltet sind und aus einem mit einer Vielzahl von Ausnehmungen versehenen Rahmenteilen und einer Vielzahl zur Grundrissform der Ausnehmungen im Rahmenteil deckungsgleich gestalteten Einsatzteilen bestehen.

Aus de DE 20114787 U ist ein ebenfalls ein Belagselement bekannt geworden mit einer Begrenzungskontur, die aus einer mit einen Formschluss begründenden Zähnen versehenen Verzahnung besteht, wobei im Verlegezustand des Belagselements die einzelnen Zähne der Verzahnung von gefügten flächenförmigen Belagselementen im Eingriff mit einer Eingriffstiefe, die der Höhe der Zähne entspricht, stehen.

Auch der US 3657852 sind Belagsplatten zu entnehmen, die über eine formschlüssige Verzahnung untereinander verbunden werden können.

Schließlich zeigt die EP 1400641 A2, welche für die Frage der erfinderischen Tätigkeit nicht von Bedeutung ist, Paneele, die mit Hilfe von Verbindungsklammern miteinander verbunden werden können, wobei die Verbindungsklammern elastisch auslenkbare Arme aufweisen, die jeweils mit einem Vorsprung versehen sind.

Die vorliegende Erfindung zielt nun darauf ab, eine Schnappverbindung zwischen den eingangs genannten Platten zu schaffen, welche eine größtmögliche Flexibilität hinsichtlich der Fügerichtung sicherstellt, wobei zumindest ein Zusammenfügen in einer Richtung parallel zur Plattenebene ermöglicht werden soll. Darüber hinaus sollen die Verriegelungskräfte im Vergleich zu den bekannten Verlegesystemen erhöht werden, sodass nicht nur Bodenbelege sondern auch Wandverkleidungen hergestellt werden können, bei welchen die Schnappverbindung zusätzlich durch das Eigengewicht der zu verlegenden Platten beansprucht wird.

Zur Lösung dieser Aufgabe besteht die Erfindung ausgehend von Platten der eingangs genannten Gattung mit Verriegelungsgliedern, welche wenigstens einen Vorsprung oder eine Ausnehmung umfassen, darin, dass der Vorsprung bzw. die Ausnehmung an wenigstens einem in der Ebene der Platte elastisch auslenkbaren Arm ausgebildet ist, sodass die Schnappverbindung durch Auslenken des Arms und anschließendes Einrasten der Verriegelungsglieder herstellbar ist. Dadurch, dass die Auslenkung des die Schnappverbindung ermöglichenden elastisch auslenkbaren Armes bei Zusammenfügen der Platten in der Ebene der Platte erfolgt, sind größere Ausweichbewegungen des auslenkbaren Arms möglich sodass die einander in der Verriegelungslage hintergreifenden Vorsprünge bzw. Ausnehmungen entsprechend größer ausgebildet werden können. Daraus folgt, dass die Schnappverbindung größere Verriegelungskräfte aufnehmen kann und ein stabilerer Verbund der Platten gewährleistet, ist. Im Gegensatz dazu ist bei einem System, bei welchem die Auslenkung der Schnappelemente in senkrechter Richtung zur Plattenebene erfolgt, auf Grund der zu erreichenden geringen Bauhöhe und der dadurch bedingten geringen Platzverhältnisse eine Auslenkung nur in geringem Maße möglich.

Als primäre Fügerichtung für die erfindungsgemäßen Platten ergibt sich eine Richtung parallel zur Plattenebene, sodass der zu verlegende Untergrund als Führungshilfe beim Ineinanderstecken der Platte dienen kann. Gleichzeitig ist jedoch durch die erfindungsgemäße Ausbildung ein Zusammenfügen in einer Weise möglich, bei welcher die Vorsprünge und Ausnehmungen der Verriegelungsglieder nicht durch Einschnappen in Eingriff miteinander gebracht werden, sondern ähnlich einem Puzzlespiel durch Einführen des Vorsprungs in senkrechter Richtung zur Plattenebene in die entsprechende Ausnehmung, wobei keine Auslenkung des elastischen Arms erfolgt. Dadurch kann bei Bedarf auch ein Auflegen von Platten in senkrechter Richtung zur Plattenebene erfolgen, sodass ein den Grundriß der Platte übersteigender Freiraum nicht benötigt wird.

Gemäß der Erfindung ist der elastisch auslenkbare Arm an der Unterseite der Platte angebracht, wobei der elastisch auslenkbare Arm mit einem an der Unterseite der Platte angebrachten plattenförmigen Träger verbunden oder an diesem angeformt ist. Bei dieser Ausbildung ist somit ein plattenförmiger Träger vorgesehen, auf welchen die zu verlegende Platte geklebt werden kann, sodass aufwändige Bearbeitungen der Platte selbst unterbleiben können. Der plattenförmige Träger und die mit diesem verbundenen oder an diesem angeformten Verriegelungsglieder, und insbesondere die elastisch auslenkbaren Arme, könnnen daher unabhängig von der Beschaffenheit des Materials und der Form der Platte aus einem geeigneten Material hergestellt werden, welches eine ausreichende Elastizität der Verriegelungsglieder und gleichzeitig eine ausreichende Stabilität der zu erzielenden Schnappverbindung sicherstellt.

Der elastische Träger kann in einem eigenen Produktionsschritt hergestellt und beispielsweise mit der Unterseite der Platte verklebt werden. Bevorzugt ist erfindungsgemäß vorgesehen, dass der Träger an die Unterseite der Platte angeformt, angeschäumt oder angespritzt ausgebildet ist. Dadurch wird eine besonders einfache und kostensparende Herstellung ermöglicht, wobei lediglich Sorge dafür getragen werden muss, dass die elastisch auslenkbaren Bereiche des plattenförmigen Trägers nicht derart mit der Platte verbunden werden, dass eine Relativbewegung verhindert wird.

Die mit wenigstens einem Vorsprung oder einer Ausnehmung versehenen elastisch auslenkbaren Arme, können in verschiedenster Weise angeordnet werden und es ist beispielsweise möglich, dass sie über den Rand der Platte vorragend ausgebildet sind, wie dies einer bevorzugten Ausbildung der erfindungsgemäßen Platte entspricht. Der über den Rand der Platte vorragende Arm wirkt hierbei mit einem entsprechenden Gegenstück an einer benachbarten Platte zusammen, wobei das Gegenstück von einem starren Teil des plattenförmigen Trägers gebildet werden kann, welcher sich innerhalb des Grundrisses der Platte befindet. Die Anordnung von beweglichen Verriegelungsgliedern, welche über den Rand der Platte vorragen und von starren Verriegelungsgliedern, welche unterhalb der Platte und innerhalb des Grundrisses der Platte angeordnet sind, hat hierbei den Vorteil, dass oben erwähnte Problematik der freien Beweglichkeit von elastischen Armen relativ zur Platte nicht mehr auftritt. Da nun keine mit der Unterseite der Platte in Berührung stehende Bereiche des plattenförmigen Trägers benötigt werden, welche frei beweglich sein sollen, kann der plattenförmige Träger unmittelbar auf die Unterseite der zu verlegenden Platte mit Hilfe einens Spritzgußverfahrens angeformt werden, wodurch die Herstellungskosten wesentlich gesenkt werden können.

Gemäß einer anderen Ausbildung der erfindungsgemäßen Platte ist es jedoch auch denkbar, dass elastisch auslenkbare Arme unter der Platte innerhalb des Plattenumrisses angeordnet sind, wobei das jeweilige elastisch auslenkbare freie Ende dieser Arme zu einer Kante der Platte weist.

Um ein universelles Verlegesystem zu schaffen, bei welchem jede Platten an beliebigen Stellen innerhalb des Plattenrasters angeordnet werden kann, ist die Ausbildung bevorzugt derart getroffen, dass elastische auslenkbare Arme von lediglich zwei einander benachbarten Kanten der Platte vorragend oder zu diesen weisend angeordnet sind. Hierbei sind also zwei Seiten einer viereckigen Platte mit männlichen Verriegelungsgliedern und die anderen zwei Seiten der Platte mit weiblichen Verriegelungsgliedern versehen. Bei dieser Ausbildung ist die Orientierung einer Platte relativ zu den benachbarten Platten vorgegeben, da jeweils ein männliches mit einem weiblichen Verriegelungsglied verbunden werden muss. Bei Platten, welche eine Struktur bzw. ein Muster aufweisen, ist es jedoch wünschenswert eine viereckige Platte auch um 90°, 180° oder 370° verdreht anzuordnen. Zu diesem Zweck ist die Erfindung mit Vorteil darart weitergebildet, dass die Platte an jeder ihrer Kanten jeweils wenigstens einen von dieser Kante vorragenden oder zu dieser Kante weisenden elastisch auslenkbaren Arm und wenigstens ein mit den elastisch auslenkbaren Armen einer benachbarten Platte zusammenwirkender starres Verriegelungsglied aufweist. Dabei ist jede Kante mit einem männlichen und einem weiblichen Verriegelungsglied versehen, sodass die höchstmögliche Flexibilität gewährleistet ist.

Um eine möglichst stabile Schnappverbindung herzustellen ist die Ausbildung bevorzugt derart getroffen, dass elastisch auslenkbare Arme paarweise mit in zueinander entgegengesetzte Richtungen gerichteten Vorsprüngen oder Ausnehmungen angeordnet sind.

Wie bereits erwähnt, verläuft die primäre Fügerichtung der erfindungsgemäßen Platten parallel zur Plattenebene. Nach der Verlegung einer ersten Reihe von Platten, muss nach Beginn der zweiten Reihe jede weitere zu verlegende Platte in der Plattenebenen unter Einhaltung einer Fügerichtung von 45° zu den Kanten der benachbarten Platten verlegt werden. Um dies zu erleichtern ist die Ausbildung mit Vorteil derart getroffen, dass die elastisch auslenkbaren Arme mit einer Seitenkante der Platte einen Winkel von 35° bis 55°, vorzugsweise 45°, einschließen.

Um in einfacher Weise eine Fugendichtung bereitzustellen ist mit Vorteil mit wenigstens zwei einander benachbarten Kanten der Platte und/oder mit einem über wenigstens zwei einander benachbarten Rändern der Platte vorragenden Bereich des plattenförmigen Trägers eine Fugendichtung verbunden, insbesondere angespritzt oder angeschäumt. Die Fugendichtung kann hierbei bei Zusammenfügen der Platten durch die Verriegelungskräfte etwas zusammengedrückt werden, sodass eine vollständige Abdichtung gelingt. Die Fugendichtung kann hierbei unmittelbar an einen über den Rand der Platte vorstehenden Bereich des plattenartigen Trägers durch Spritzgußverfahren angebracht werden, sodass keine gesonderten Stege, Randprofile oder dgl. benötigt werden, in welche Dichtungslippen eingesteckt werden müssen.

Zur Lösung der eingangs genannten Aufgabe besteht die Erfindung auch in einem plattenförmigen Träger mit den Merkmalen des Anspruchs 11.

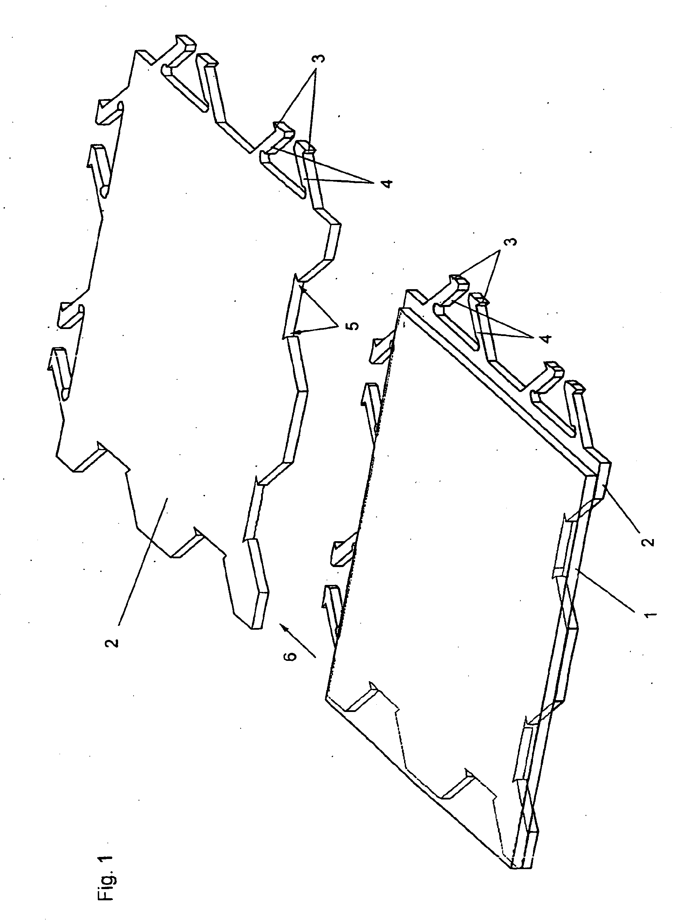

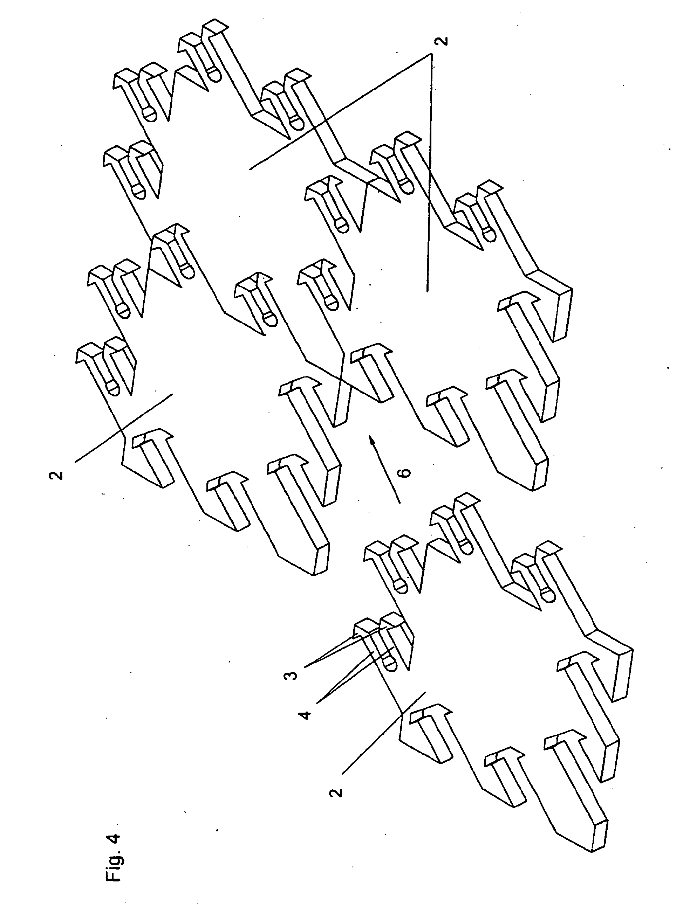

Die Erfindung wird nachfolgend anhand von in der Zeichnung dargestellten Ausführungsbeispielen näher erläutert. In dieser zeigen Fig.1, Fig.2 und Fig.3 eine erste Ausbildung der erfindungsgemäßen Platte samt dem plattenförmigen Träger und Figuren 4, 5, 6 und 7 abgewandelte Ausbildungen des plattenförmigen Trägers.

In Fig.1 ist eine Platte, wie beispielsweise eine Granitplatte zur Verlegung von Fußböden, mit 1 bezeichnet. An der Unterseite der Platte 1 ist ein plattenförmiger Träger 2 angebracht, welcher Verriegelungsglieder für die Herstellung einer Schnappverbindung mit einem weiteren Träger 2 aufweist. Der weitere Träger 2 trägt ebenfalls eine Platte, welche der Übersichtlichkeit halber nicht dargestellt ist. Die Verriegelungsglieder sind von Vorsprüngen 3, welche an elastisch auslenkbaren Armen 4 ausgebildet sind, und von Ausnehmungen 5 gebildet. Beim Zusammenfügen zweier Platten 1 werden die selben beispielsweise in Richtung des Pfeiles 6, welcher parallel zur Plattenebene verläuft, miteinander verbunden, wobei die Arme 4 elastisch einwärts verschwenkt werden und die Vorsprünge 3 in die entsprechenden Ausnehmungen 5 einrasten. Hierbei werden die elastischen Arme 4 in der Ebene der Platte 1 ausgelenkt.

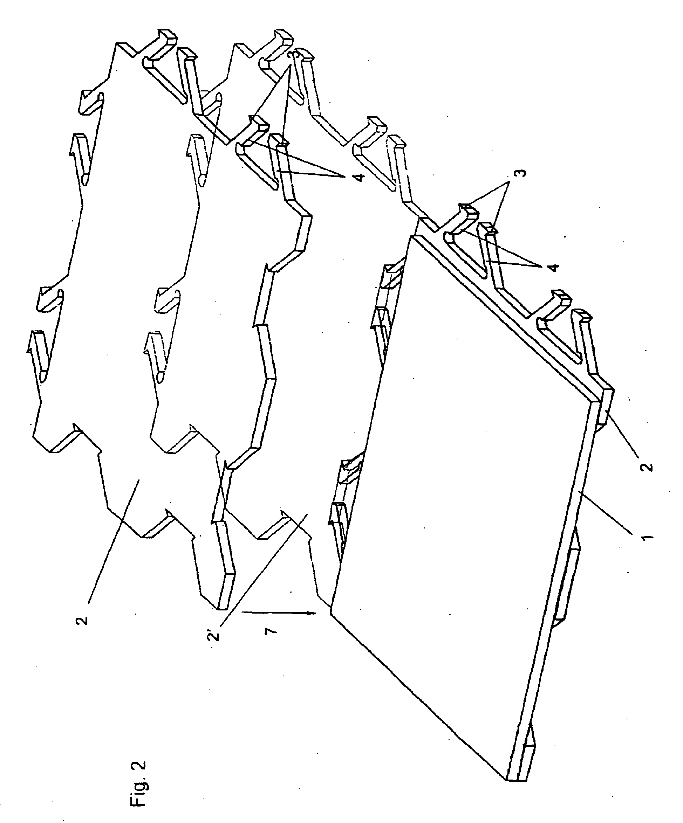

Bei Bedarf können die Platten 1 jedoch auch in senkrechter Richtung zur Plattenebene aneinander gefügt werden, indem die Vorsprünge 3 des einen Trägers 2 in Richtung des Pfeiles 7 von oben in die entsprechenden Ausnehmungen 5 des anderen Trägers 2 eingeführt werden, ohne dass es zu einer Auslenkung der Arme 4 kommt, wie dies in Fig. 2 dargestellt ist. Hierbei ist der Träger 2 in der Ausgangslage mit normalen Linien und in der zusammengebauten Lage mit dünnen Linien dargestellt und mit 2' bezeichnet.

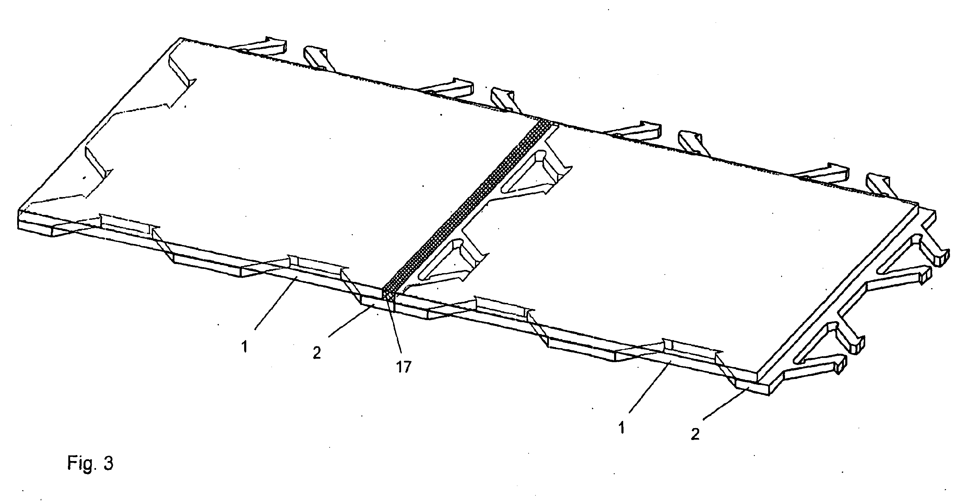

Bei der Ausbildung gemäß den Fig.1 und 2 ragen die elastisch auslenkbaren Arme 4 über den Rand der Platte 1 vor, wobei die Ausnehmungen 5 in einem starren Teil des plattenförmigen Trägers 2, nämlich in einem Bereich innerhalb des Plattenumrisses, ausgebildet sind. Der plattenförmige Träger 2 weist einen über den Rand der Platte 1 vorragenden streifenartigen Bereich 8 vor, welcher sich an zwei einander benachbarten Rändern 9 und 10 der Platte 1 erstrecket und an welchem auch die vorragenden Arme 4 ausgebildet sind. Im Bereich 8 kann eine Fugendichtung angeordnet bzw. durch ein Spritzgussverfahren angespritzt werden, wie dies in Fig.3 dargestellt ist. Hierbei sind zwei Platten 1 miteinander verbunden und es ist ersichtlich, dass zwischen den beiden Platten 1 im Bereich 8 eine Fuge entsteht, welche durch eine Fugendichtung 17 geschlossen werden kann. Die Fugendichtung 17 kann hierbei bei Verlegen der Platte in die entsprechenden Fugen eingesetzt werden. Zur einfacheren Handhabung ist jedoch vorgesehen, dass die Fugendichtung werksseitig bereits mit dem vorragenden Bereich 8 des plattenförmigen Trägers 2 und/oder mit der Kante 9 bzw. 10 der Platte 1 verbunden ist, wobei bevorzugt die Fugendichtung 17 durch ein Spritzgußverfahren angespritzt oder angeschäumt wird.

Bei der Darstellung gemäß Fig.4 sind die über den Rand der Platte 1 vorragenden Arme 4 des plattenförmigen Trägers 2 in einem Winkel von 45° zum Rand der Platte 1 angeordnet, sodass eine entsprechende 45°-Fügerichtung gemäß dem Pfeil 6 begünstigt wird. Ebenso wie bei der Ausbildung gemäß Fig.1 sind bei der Ausbildung gemäß Fig.4 die Arme 4 paarweise angeordnet, wobei die beiden Arme 4 eines Paares in zueinander entgegengesetzte Richtungen gerichtete Vorsprünge 3 aufweisen. An zwei einander benachbarten Seiten des plattenförmigen Trägers 2 sind hierbei jeweils zwei Paare aus jeweils zwei Armen 4 angeordnet.

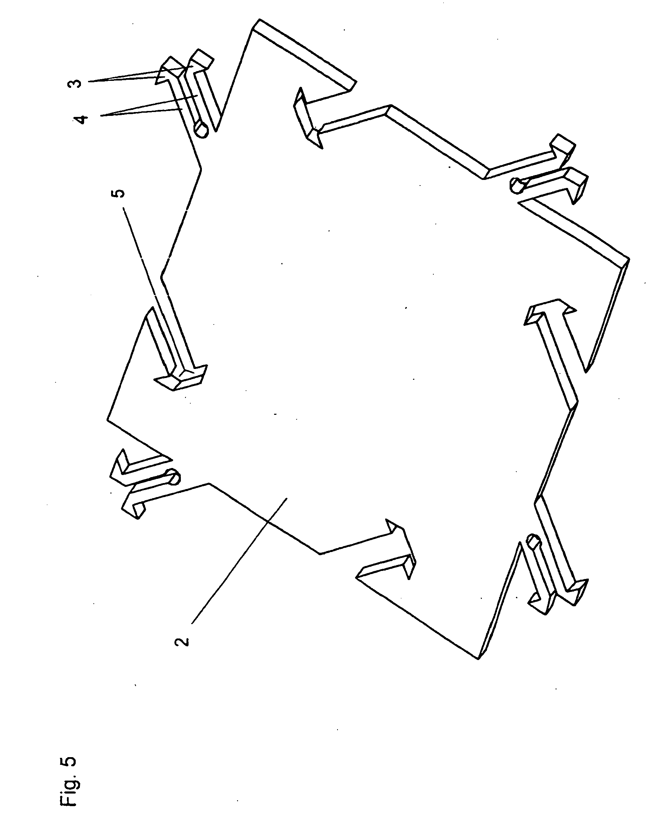

Bei der Darstellung gemäß Fig.5 sind die vorstehenden Arme 4 nicht nur an zwei einander benachbarten Seiten des Trägers 2 sondern an allen Seiten angeordnet, wobei an jeder Seite entsprechende Ausnehmungen 5 angeordnet sind. Dadurch kann die Orientierung der Platte 1 bei Zusammenfügen mit gleichartig aufgebauten Platten frei gewählt werden.

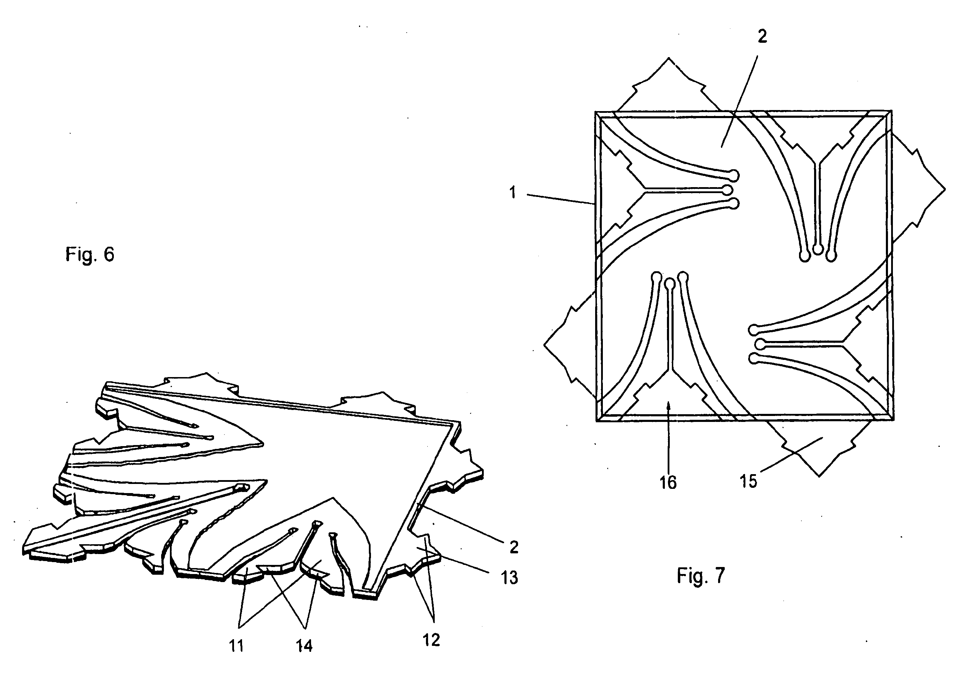

Bei der Ausbildung gemäß Fig.6 sind nun die federnden Arme 11 des plattenförmigen Trägers 2 in einem Bereich innerhalb des Plattenumrisses angeordnet und es sind die starren Verriegelungsglieder mit den Vorsprüngen 12 auf starren Teilen 13 des plattenförmigen Trägers 2 ausgebildet. Bei Zusammenfügen zweier Platten rasten die Vorsprünge 12 in entsprechende Ausnehmungen 14 der elastisch auslenkbaren Arme 11 ein. Wie aus einem Vergleich zwischen den Fig.1 und 6 erkennbar ist, ist es für das Wesen der Erfindung unerheblich, ob die federnden Arme mit Vorsprüngen oder Ausnehmungen versehen sind. Ebenso ist es unwesentlich, ob die Vorsprünge auf über den Plattenrand vorragenden Bereichen oder innerhalb des Plattenumrisses angeordnet sind.

Bei der Ausbildung gemäß Fig.7 ist an jeder Kante der Platte sowohl ein männliches Verriegelungsglied 15 als auch ein weibliches Verriegelungsglied 16 angeordnet, sodass die Orientierung der Platte 1 bei Zusammenfügen mit gleichartig aufgebauten Platten frei gewählt werden kann. Dies ist insbesondere dann von Vorteil, wenn auf bestimmte auf der Plattenoberfläche angebrachte Strukturen bzw. Muster Rücksicht genommen werden soll.

## Patentansprüche

1. Platte zur Verlegung auf Böden, Wänden, Decken, Fassaden oder dgl. im Innen- und Außenbereich, mit Verriegelungsgliedern, welche mit Verriegelungsgliedern benachbarter Platten (1) zur Herstellung einer Schnappverbindung zwischen denselben zusammenwirken, wobei die Verriegelungsglieder wenigstens einen Vorsprung (3,12) oder eine Ausnehmung (5,14) umfassen und mit einem an der Unterseite der Platte (1) angebrachten plattenförmigen Träger (2) verbunden oder an diesem angeformt sind, **dadurch gekennzeichnet, dass** der Vorsprung (3,12) bzw. die Ausnehmung (5,14) an wenigstens einem in der Ebene der Platte (1) elastisch auslenkbaren Arm (4,11) ausgebildet ist, sodass die Schnappverbindung durch Auslenken des Arms und anschließendes Einrasten der Verriegelungsglieder herstellbar ist.

2. Platte nach Anspruch 1, **dadurch gekennzeichnet, dass** der Träger (2) an die Unterseite der Platte (1) angeformt, angeschäumt oder angespritzt ausgebildet ist.

3. Platte nach Anspruch 1 oder 2, **dadurch gekennzeichnet, dass** elastisch auslenkbare Arme (4,11) über den Rand der Platte (1) vorragend ausgebildet sind.

4. Platte nach Anspruch 1, 2 oder 3 **dadurch gekennzeichnet, dass** elastisch auslenkbare Arme (11) unter der Platte (1) innerhalb des Plattenumrisses angeordnet sind, wobei das jeweilige elastisch auslenkbare freie Ende dieser Arme (11) zu einer Kante der Platte (1) weist.

5. Platte nach einem der Ansprüche 1 bis 4, **dadurch gekennzeichnet, dass** elastisch auslenkbare Arme (4,11) von lediglich zwei einander benachbarten Kanten (9,10) der Platte (1) vorragend oder zu diesen weisend angeordnet sind.

6. Platte nach einem der Ansprüche 1 bis 5, **dadurch gekennzeichnet, dass** der bzw. die an einem elastisch auslenkbaren Arm (4,11) ausgebildete Vorsprung (3,12) bzw. Ausnehmung (5,14) mit einer/m an einem starren Teil (13) einer benachbarten Platte (1) ausgebildeten Ausnehmung (5,14) bzw. Vorsprung (3,12) zusammenwirkt.

7. Platte nach einem der Ansprüche 1 bis 6, **dadurch gekennzeichnet, dass** die Platte (1) an jeder ihrer Kanten jeweils wenigstens einen von dieser Kante vorragenden (4) oder zu dieser Kante weisenden (11) elastisch auslenkbaren Arm und wenigstens ein mit den elastisch auslenkbaren Armen (4,11) einer benachbarten Platte (1) zusammenwirkendes starres Verriegelungsglied (13) aufweist.

8. Platte nach einem der Ansprüche 1 bis 7, **dadurch gekennzeichnet, dass** elastisch auslenkbare Arme (4,11) paarweise mit in zueinander entgegengesetzte Richtungen gerichteten Vorsprüngen (3,12) oder Ausnehmungen (5,14) angeordnet sind.

9. Platte nach einem der Ansprüche 1 bis 8, **dadurch gekennzeichnet, dass** die elastisch auslenkbaren Arme (4,11) mit einer Seitenkante der Platte (1) einen Winkel von 35° bis 55°, vorzugsweise 45°, einschließen.

10. Platte nach einem der Ansprüche 1 bis 9, **dadurch gekennzeichnet, dass** mit wenigstens zwei einander benachbarten Kanten (9,10) der Platte (1) und/oder mit einem über wenigstens zwei einander benachbarte Ränder (9,10) der Platte (1) vorragenden Bereich (8) des plattenförmigen Trägers (2) eine Fugendichtung (17) verbunden, insbesondere angespritzt oder angeschäumt, ist.

11. Plattenförmiger Träger zur Anbringung an der Unterseite einer Platte (1) zur Verlegung auf Böden, Wänden, Decken, Fassaden oder dgl. im Innen- und Außenbereich, mit welchem Verriegelungsglieder umfassend wenigstens einen Vorsprung (3,12) oder eine Ausnehmung (5,14) verbunden sind oder an welchen derartige Verriegelungsglieder angeformt sind, wobei die Verriegelungsglieder mit Verriegelungsglieder benachbarter Träger (2) zur Herstellung einer Schnappverbindung zwischen denselben zusammenwirken, **dadurch gekennzeichnet, dass** der Vorsprung (3,12) bzw. die Ausnehmung (5,14) an wenigstens einem in der Ebene des Trägers (2) elastisch auslenkbaren Arm (4,11) ausgebildet ist, sodass die Schnappverbindung durch Auslenken des Arms und anschließendes Einrasten der Verriegelungsglieder herstellbar ist, wobei der elastisch auslenkbare Arm (4,11) mit einer Seitenkante des Trägers (2) einen Winkel von 35° bis 55°, vorzugsweise 45°, einschließt.

12. Plattenförmiger Träger nach Anspruch 11, **dadurch gekennzeichnet, dass** elastisch auslenkbare Arme (4,11) von lediglich zwei einander benachbarten Kanten (9,10) des plattenförmigen Trägers (2) vorragend oder zu diesen weisend angeordnet sind.

13. Plattenförmiger Träger nach Anspruch 11 oder 12, **dadurch gekennzeichnet, dass** der bzw. die an einem elastisch auslenkbaren Arm (4,11) ausgebildete Vorsprung (3,12) bzw. Ausnehmung (5,14) mit einer/m an einem starren Teil (13) einer benachbarten Trägers (2) ausgebildeten Ausnehmung (5,14) bzw. Vorsprung (3,12) zusammenwirkt.

14. Plattenförmiger Träger nach Anspruch 11,12 oder 13, **dadurch gekennzeichnet, dass** der Träger (2) an jeder seiner Kanten jeweils wenigstens einen von dieser Kante vorragenden (4) oder zu dieser Kante weisenden (11) elastisch auslenkbaren Arm und wenigstens ein mit den elastisch auslenkbaren Armen (4,11) eines benachbarten Trägers (2) zusammenwirkendes starres Verriegelungsglied (13) aufweist.

15. Plattenförmiger Träger nach einem der Ansprüche 11 bis 14, **dadurch gekennzeichnet, dass** elastisch auslenkbare Arme (4,11) paarweise mit in zueinander entgegengesetzte Richtungen gerichteten Vorsprüngen (3,12) oder Ausnehmungen (5,14) angeordnet sind.

16. Plattenförmiger Träger nach einem der Ansprüche 11 bis 15, **dadurch gekennzeichnet, dass** mit einem über wenigstens zwei einander benachbarte Ränder (9,10) der Platte (1) vorragenden Bereich (8) des plattenförmigen Trägers (2) eine Fugendichtung (17) verbunden, insbesondere angespritzt oder angeschäumt, ist.

## Claims

1. A plate to be laid on floors, walls, ceilings, facades or the like, both inside and outside, which plate comprises locking members which cooperate with locking members of neighbouring plates (1) to produce a snap connection between the same, said locking members including at least one projection (3, 12) or recess (5, 14) and being connected with, or formed to, a plate-shaped carrier (2) attached to the lower side of the plate (1), **characterized in that** said projection (3, 12) or recess (5, 14), respectively, is formed on at least one arm (4, 11) which is elastically deflectable in the plane of the plate (1), so that said snap connection is producible by a deflection of the arm and the subsequent engagement of the locking members.

2. A plate according to claim 1, **characterized in that** the carrier (2) is formed, foamed or injection-moulded to the lower side of the plate (1).

3. A plate according to claim 1 or 2, **characterized in that** elastically deflectable arms (4, 11) are designed to project beyond the edge of the plate (1).

4. A plate according to 1, 2 or 3, **characterized in that** elastically deflectable arms (11) are arranged below the plate (1) within the plate contour, with the respectively elastically deflectable free ends of said arms (11) being oriented towards an edge of the plate (1).

5. A plate according to any one of claims 1 to 4, **characterized in that** elastically deflectable arms (4, 11) are arranged to project from, or be oriented to, only two adjacent edges (9, 10) of the plate (1).

6. A plate according to any one of claims 1 to 5, **characterized in that** the projection (3, 12) or recess (5, 14), respectively, formed on an elastically deflectable arm (4, 11) cooperates with a recess (5, 14) or projection (3, 12), respectively, formed on a rigid portion (13) of a neighbouring plate (1).

7. A plate according to any one of claims 1 to 6, **characterized in that** the plate (1) on each of its edges comprises at least one elastically deflectable arm each projecting (4) from, or oriented (11) to, the respective edge, and at least one rigid locking member (13) cooperating with the elastically deflectable arms (4, 11) of a neighbouring plate (1).

8. A plate according to any one of claims 1 to 7, **characterized in that** elastically deflectable arms (4, 11) are arranged in pairs, including projections (3, 12) or recesses (5, 14) oriented in relatively opposite directions.

9. A plate according to any one of claims 1 to 8, **characterized in that** the elastically deflectable arms (4, 11) enclose an angle of 35° to 55°, preferably 45°, with a lateral edge of the plate (1).

10. A plate according to any one of claims 1 to 9, **characterized in that** a joint seal (17) is connected, particularly injection-moulded or foamed, to at least two adjacent edges (9, 10) of the plate (1) and/or to a portion (8) of the plate-shaped carrier (2) projecting beyond at least two adjacent edges (9, 10) of the plate (1).

11. A plate-shaped carrier for attachment to the lower side of a plate (1) to be laid on floors, walls, ceilings, facades or the like, both inside and outside, to which plate-shaped carrier locking members comprising at least one projection (3, 12) or recess (5, 14) are connected or formed, said locking members cooperating with locking members of neighbouring carriers (2) to produce a snap connection between the same, **characterized in that** said projection (3, 12) or recess (5, 14), respectively, is formed on at least one arm (4, 11) which is elastically deflectable in the plane of the plate (1), so that said snap connection is producible by a deflection of the arm and the subsequent engagement of the locking members, wherein the elastically deflectable arm (4, 11) encloses an angle of 35° to 55°, preferably 45°, with a lateral edge of the carrier (2).

12. A plate-shaped carrier according to claim 11, **characterized in that** elastically deflectable arms (4, 11) are arranged to project from, or be oriented to, only two adjacent edges (9, 10) of the plate-shaped carrier (2).

13. A plate-shaped carrier according to claim 11 or 12, **characterized in that** the projection (3, 12) or recess (5, 14), respectively, formed on an elastically deflectable arm (4, 11) cooperates with a recess (5, 14) or projection (3, 12), respectively, formed on a rigid portion (13) of a neighbouring carrier (2).

14. A plate-shaped carrier according to claim 11, 12 or 13, **characterized in that** the carrier (2) on each of its edges comprises at least one elastically deflectable arm each projecting (4) from, or oriented (11) to, the respective edge, and at least one rigid locking member (13) cooperating with the elastically deflectable arms (4, 11) of a neighbouring carrier (2).

15. A plate-shaped carrier according to any one of claims 11 to 14, **characterized in that** elastically deflectable arms (4, 11) are arranged in pairs, including projections (3, 12) or recesses (5, 14) oriented in relatively opposite directions.

16. A plate-shaped carrier according to any one of claims 11 to 15, **characterized in that** a joint seal (17) is connected, particularly injection-moulded or foamed, to a portion (8) of the plate-shaped carrier (2) projecting beyond at least two neighbouring edges (9, 10) of the plate (1).

## Revendications

1. Plaque destinée à être posée sur des sols, des murs, des plafonds, des façades ou similaires, à l'intérieur et à l'extérieur, avec des éléments de verrouillage qui coopèrent avec les éléments de verrouillage de plaques (1) voisines pour créer un assemblage emboîté entre celles-ci, lesquels éléments de verrouillage comprennent au moins une saillie (3, 12) ou un évidement (5, 14) et sont reliés à un support en forme de plaque (2) disposé sur la face inférieure de la plaque (1) ou formés sur celui-ci, **caractérisée en ce que** la saillie (3, 12) ou l'évidement (5, 14) est formé sur au moins un bras (4, 11) déformable de façon élastique dans le plan de la plaque (1), de sorte que l'assemblage emboîté peut être réalisé en déviant le bras et en emboîtant ensuite les éléments de verrouillage.

2. Plaque selon la revendication 1, **caractérisée en ce que** le support (2) est formé sur la face inférieure de la plaque (1), formé par application de mousse ou formé par injection.

3. Plaque selon la revendication 1 ou 2, **caractérisée en ce que** des bras (4, 11) déformables élastiquement sont formés en saillie au-delà du bord de la plaque (1).

4. Plaque selon la revendication 1, 2 ou 3, **caractérisée en ce que** des bras (11) déformables élastiquement sont formés sous la plaque à l'intérieur du contour de la plaque, l'extrémité libre déformable élastiquement de chacun de ces bras (11) étant dirigée vers un bord de la plaque (1).

5. Plaque selon l'une des revendications 1 à 4, **caractérisée en ce que** des bras déformables élastiquement (4, 11) sont disposés de façon à dépasser de seulement deux bords (9, 10) voisins l'un de l'autre de la plaque (1) ou dirigés vers ceux-ci.

6. Plaque selon l'une des revendications 1 à 5, **caractérisée en ce que** la saillie (3, 12) ou l'évidement (5, 14) formé sur un bras déformable élastiquement (4, 11) coopère avec une saillie (3, 12) ou un évidement (5, 14) formé sur une partie rigide (13) d'une plaque (1) voisine.

7. Plaque selon l'une des revendications 1 à 6, **caractérisée en ce que** la plaque (1) présente sur chacun de ses bords au moins un bras déformable élastiquement dépassant de ce bord (4) ou dirigé vers ce bord (11) et au moins un élément de verrouillage (13) rigide coopérant avec les bras déformables élastiquement (4, 11) d'une plaque (1) voisine.

8. Plaque selon l'une des revendications 1 à 7, **caractérisée en ce que** les bras déformables élastiquement (4, 11) sont disposés par paires avec des saillies (3, 12) ou des évidements (5, 14) orientés dans des directions opposées les uns aux autres.

9. Plaque selon l'une des revendications 1 à 8, **caractérisée en ce que** les bras déformables élastiquement (4, 11) forment avec un bord latéral de la plaque (1) un angle de 35° à 55°, de préférence de 45°.

10. Plaque selon l'une des revendications 1 à 9, **caractérisée en ce qu'**une garniture d'étanchéité de joint (17) est reliée avec au moins deux bords (9, 10) voisins l'un de l'autre de la plaque (1) et/ou avec une zone (8) du support en forme de plaque (2) dépassant au-delà d'au moins deux bords (9, 10) voisins l'un de l'autre de la plaque (1), de préférence reliée par injection ou par application de mousse.

11. Support en forme de plaque destiné à être appliqué sur la face inférieure d'une plaque (1) à poser sur des sols, des murs, des plafonds, des façades ou similaires à l'intérieur et à l'extérieur, avec lequel des éléments de verrouillage comprenant au moins une saillie (3, 12) ou un évidement (5, 14) sont reliés ou sur lequel de tels éléments de verrouillage sont formés, lesquels éléments de verrouillage coopèrent avec des éléments de verrouillage de supports (2) voisins pour créer des assemblages emboîtés, **caractérisé en ce que** la saillie (3, 12) ou l'évidement (5, 14) est formé sur au moins un bras (4, 11) déformable élastiquement dans le plan du support (2), de sorte que l'assemblage emboîté peut être réalisé en déviant le bras et en emboîtant ensuite les éléments de verrouillage, le bras déformable élastiquement (4, 11) formant avec un bord latéral du support (2) un angle de 35° à 55°, de préférence de 45°.

12. Support en forme de plaque selon la revendication 11, **caractérisé en ce que** les bras déformables élastiquement (4, 11) sont disposés de façon à dépasser de seulement deux bords (9, 10) voisins l'un de l'autre du support en forme de plaque (2) ou à se diriger vers ceux-ci.

13. Support en forme de plaque selon la revendication 11 ou 12, **caractérisé en ce que** la saillie (3, 12) ou l'évidement (5, 14) formé sur un bras déformable élastiquement (4, 11) coopère avec une saillie (3, 12) ou un évidement (5, 14) formé sur une partie rigide (13) d'un support (2) voisin.

14. Support en forme de plaque selon la revendication 11, 12 ou 13, **caractérisé en ce que** le support (2) présente sur chacun de ses bords au moins un bras déformable élastiquement dépassant de ce bord (4) ou dirigé vers ce bord (11) et au moins un élément de verrouillage rigide (13) coopérant avec les bras déformables élastiquement (4, 11) d'un support (2) voisin.

15. Support en forme de plaque selon l'une des revendications 11 à 14, **caractérisé en ce que** les bras déformables élastiquement (4, 11) sont disposés par paires avec des saillies (3, 12) ou des évidements (5, 14) orientés dans des directions opposées les uns aux autres.

16. Support en forme de plaque selon l'une des revendications 11 à 15, **caractérisée en ce qu'**une garniture d'étanchéité de joint (17) est reliée à la zone (8) du support en forme de plaque (2) dépassant au-delà d'au moins deux bords (9, 10) voisins l'un de l'autre de la plaque, de préférence par injection ou par application de mousse.
